# FASCICULE DE BREVET EUROPEEN

(11) **EP 2 652 844 B1**
(45) Date de publication et mention de la délivrance du brevet: **08.10.2014**
(21) Numéro de dépôt: 11805455.0
(22) Date de dépôt: 14.12.2011
(51) Int. Cl.: H01S 3/042, H01S 3/06, H01S 3/02, H01S 3/04, H01S 3/08, H01S 3/0941

(54) **MODULE A GAIN LASER ET METHODE DE FABRICATION D'UN TEL MODULE**
LASERVERSTÄRKUNGSMODUL UND DESSEN HERSTELLUNGSVERFAHREN
LASER GAIN MODULE AND ITS MANUFACTURING METHOD

(30) Priorité: 17.12.2010 FR 1060675
(43) Date de publication de la demande: 23.10.2013
(73) Titulaire: Fibercryst, 69150 Décines-Charpieu (FR); Centre National de la Recherche Scientifique (CNRS), 75794 Paris Cedex 16 (FR)
(72) Inventeur: AUBRY, Nicolas, F-55100 Verdun (FR); PERRODIN, Didier, F-69380 Chazay d'Azergues (FR); DIDIERJEAN, Julien, 69100 Villeurbanne (FR); FOURMIGUE, Jean-Marie, F-77590 Bois Le Roi (FR); BALEMBOIS, François, F-91870 Boissy Le Sec (FR); MARTIAL, Igor, 75014 Paris (FR)
(74) Mandataire: Osha Liang SARL
(86) Numéro de dépôt international: PCT/EP2011/072714
(87) Numéro de publication internationale: WO 2012/080308

(56) Documents cités:
- EP-A2- 0 251 719
- DE-A1- 10 139 753
- JP-A- 11 004 029
- US-A- 4 897 850
- US-A1- 2007 201 532
- CHENAIS ET AL: "On thermal effects in solid-state lasers: The case of ytterbium-doped materials", PROGRESS IN QUANTUM ELECTRONICS, PERGAMON PRESS, OXFORD, GB, vol. 30, no. 4, 21 février 2007 (2007-02-21), pages 89-153, XP005896892, ISSN: 0079-6727, DOI: DOI:10.1016/J.PQUANTELEC.2006.12.001 cité dans la demande

## Description

### Domaine de l'invention

La présente invention concerne un module à gain laser à très bon refroidissement ainsi qu'une méthode de fabrication d'un tel module.

### Etat de l'art

On connaît des systèmes laser solides pompés optiquement, émettant à de très fortes puissances optiques, typiquement plusieurs centaines de Watts de puissance moyenne, et plusieurs Mégawatts de puissance crête. Les milieux actifs ou milieux à gain de ces lasers sont, par exemple, des plaques ou des barreaux cristallins pompés par diode laser. On appelle généralement barreau laser un milieu solide, de forme allongée, capable de présenter un gain optique sous l'effet d'un apport d'énergie, possédant un axe optique de propagation du signal laser et deux interfaces optiques en vis-à-vis traversées par l'axe optique. Ce milieu peut être composé d'un matériau cristallin, céramique ou d'un matériau amorphe, contenant des dopants actifs (comme par exemple des ions terres rares). Le barreau peut être de section ronde, carrée, rectangulaire ou autre. Les barreaux laser sont par exemple des cristaux laser, des céramiques laser, des fibres de verre, ou des fibres cristallines.

Le pompage optique peut être longitudinal ou quasi longitudinal ; dans l'un ou l'autre de ces cas, le faisceau de pompe entre dans le barreau laser par une des interfaces optiques traversées par l'axe optique. Il se propage soit le long de l'axe optique du barreau (pompage longitudinal) soit avec un angle non nul par rapport à l'axe optique du barreau (pompage quasi longitudinal). Le pompage peut également être réalisé transversalement (ou latéralement); dans ce cas, le faisceau de pompe entre dans le barreau laser par une surface du barreau autre que l'une des deux interfaces optiques traversées par l'axe optique. Dans tous les cas, le pompage optique apporte de l'énergie qui est partiellement absorbée par le milieu à gain solide. Le milieu restitue une partie de cette énergie sous forme de rayonnement laser. Il en restitue également une partie sous forme de chaleur. Par exemple, dans un cristal de Nd:YAG pompé longitudinalement par une diode laser à 808 nm et émettant un faisceau laser à 1064 nm, environ 25% de la puissance de pompe absorbée est perdue sous forme de chaleur.

L'élévation de température dans le milieu provoque une diminution de ses qualités optiques et thermiques. Les sections efficaces d'émission et la conductivité thermique des barreaux laser ont en effet tendance à diminuer avec la température (Jun Dong et al., "Temperature-dependent stimulated emission cross section and concentration quenching in highly doped Nd3+:YAG crystals", Physica status solidi. A. Applied research 202 (2005) p.2565). Il est donc important de limiter efficacement l'élévation de température des barreaux laser sous l'effet du pompage optique, grâce à des dispositifs de refroidissement.

Pour refroidir les barreaux laser, ceux-ci sont généralement maintenus dans des montures métalliques, la monture métallique formant avec le barreau laser un module à gain laser. De la chaleur est produite dans la zone pompée, *i.e.,* la zone active du barreau directement traversée par l'énergie de pompage. La conductivité thermique du barreau, qui est pour les cristaux laser typiquement de l'ordre de 5 à 20 W.m⁻¹.K⁻¹, permet l'existence d'un flux thermique allant de la zone de pompage vers le bord du milieu à gain. Pour évacuer la chaleur du barreau, un contact thermique entre le barreau et sa monture métallique doit être établi. Le contact thermique est caractérisé par le coefficient de transfert thermique, dont une définition est donnée par exemple dans H.S. Carlslaw, J.C. Jaeger, "Conduction of heat in solids ", 2nd edition, clarendon press, Oxford, 1986. Le coefficient de transfert thermique (en W.cm⁻².K⁻¹) entre deux objets correspond au rapport entre le flux thermique (en W.cm⁻²) allant de l'un des deux objets à l'autre et l'écart de température (en K) entre eux. Typiquement, le coefficient de transfert thermique mesuré dans des modules à gain laser de l'art antérieur est de l'ordre de 1 W.cm⁻².K⁻¹ et ne dépasse pas 4 W.cm⁻².K⁻¹. La chaleur est ensuite conduite vers un extracteur de chaleur ou un système de refroidissement à l'eau grâce à la monture métallique, dont la conductivité thermique est généralement très élevée (environ 100 à 400 W.m⁻¹.K⁻¹). La chaleur est ainsi dissipée vers l'extérieur.

De nombreux systèmes de refroidissement sont basés sur une pression mécanique du système de refroidissement sur le barreau laser, ce qui permet d'assurer le contact thermique entre les deux. Cette pression inflige des contraintes mécaniques au barreau. Ces contraintes peuvent se traduire optiquement par des effets de dépolarisation. Ces contraintes sont présentes même en l'absence de pompage optique mais, lors du pompage optique, l'augmentation de température provoque une déformation du barreau (une dilatation dans la majorité des cas) qui accentue les contraintes mécaniques subies par le barreau, et peut provoquer des cassures internes.

Le contact thermique entre le système de refroidissement et le barreau laser est généralement amélioré par l'utilisation de milieux intermédiaires comme des graisses thermiques, des feuilles d'indium ou de graphite pressées entre la monture et le barreau (voir par exemple S.Chenais et al., « Direct and absolute temperature mapping and heat transfer measurements in diode-end-pumped Yb : YAG», Appl. Phys. B 79 (2004), p. 221), ou encore des couches adhésives (voir par exemple US 5,949,805). Il est également possible de fixer un cristal optiquement inactif possédant une forte conductivité thermique au barreau laser par une technique de « bonding » (voir par exemple US 5,846,638). Néanmoins, ces milieux intermédiaires posent différents problèmes. Les graisses thermiques et les couches adhésives peuvent subir des dégazages, dégageant ainsi des polluants. Par ailleurs, leur vieillissement est rapide, impliquant un entretien régulier des lasers. Ceci rend leur utilisation très difficile dans des systèmes laser industriels demandant une grande propreté et une maintenance réduite. Pour utiliser efficacement les feuilles d'indium ou de graphite, il faut exercer une forte pression sur le milieu à gain solide pour écraser la couche d'indium ou de graphite et chasser l'air entre la monture, la feuille et le milieu à gain solide (un exemple concret de ceci est donné dans S. Chenais et al., "On thermal effects in solid-state lasers: The case of ytterbium-doped materials", Progress in Quantum Electronics 30 (2006) p.89). Ceci implique que le barreau laser subit des contraintes mécaniques importantes, ce qui peut entrainer l'apparition de pertes optiques par biréfringence et des cassures dans le barreau. De plus, les feuilles s'adaptent très mal à des barreaux de section ronde ou avec de multiples facettes. Le dépôt d'un cristal optiquement inactif entre la monture métallique et le milieu actif par « bonding » est généralement très coûteux et demande plusieurs étapes complexes de fabrication.

A titre d'exemple de réalisation de l'art antérieur, la figure 1 reproduit une figure du brevet US 5,949,805, décrivant un système laser solide comprenant un barreau comme milieu à gain solide, pompé latéralement par un réseau de diodes. Dans cet exemple, le milieu à gain 101 est fixé dans un ensemble métallique 102, 103 conducteur de chaleur pour évacuer la chaleur générée par des diodes de pompage 104. Le milieu à gain est fixé à l'ensemble métallique à l'aide d'une couche adhésive conductrice de chaleur (non représentée). EP 0 251 719 divulgue un laser à l'état solide comprenant un corps métallique en aluminium ajusté autour du milieu à gain.

Outre les problèmes déjà évoqués liés à l'utilisation d'une couche adhésive, ce type de refroidissement a l'inconvénient de ne pas présenter de symétrie radiale par rapport à l'axe optique du barreau. En effet, sous l'effet du pompage optique et de l'échauffement, une lentille thermique peut se créer dans le milieu actif Cette lentille, induite par les gradients de température dans le barreau entre la zone pompée et les zones non pompées, peut provoquer une déformation des faisceaux laser émis (voir, par exemple, S. Chenais et al., "On thermal effects in solid-state lasers: The case of ytterbium-doped materials", Progress in Quantum Electronics 30 (2006) p.89). Si le refroidissement du barreau laser présente une bonne symétrie radiale par rapport à l'axe optique, cette lentille sera généralement peu aberrante et pourra être corrigée facilement. Si le refroidissement du barreau laser n'est pas homogène, la lentille thermique résultante sera aberrante, induisant une déformation plus forte et plus difficile à corriger du faisceau signal.

Un objet de la présente invention consiste à proposer un module à gain laser qui présente une très bonne dissipation de la chaleur, notamment grâce à un refroidissement homogène, sans soumette le barreau laser à des contraintes mécaniques, de façon à éviter des pertes optiques induites par dépolarisation et des détériorations du faisceau laser. Un autre objet de l'invention est de proposer un module à gain laser ayant une très bonne résistance au vieillissement et à l'usure.

### Résumé de l'invention

Selon un premier aspect, l'invention concerne un module à gain laser comprenant un barreau laser avec deux interfaces optiques agencées en vis-à-vis, le barreau étant destiné à un pompage optique longitudinal ou quasi-longitudinal. Le module à gain laser comprend également un corps de refroidissement métallique dont au moins une partie est moulée autour du barreau laser pour recouvrir l'ensemble des surfaces autres que les interfaces optiques de manière à ce que le module à gain laser forme un bloc solide non démontable à température ambiante. Le module à gain laser ainsi obtenu présente une excellente dissipation de la chaleur, homogène du fait d'un refroidissement réalisé sur l'ensemble des surfaces non optiques. Le module à gain laser ainsi réalisé permet de maintenir efficacement le barreau en exerçant une pression mécanique bien plus faible que celle exercée par les montures utilisant un serrage mécanique. De plus il ne contient aucune substance organique (colle, graisse, adhésif) susceptible de dégazage et de vieillissement rapide.

Selon un premier mode de réalisation préféré de l'invention, le corps de refroidissement comprend une partie interne métallique moulée autour du barreau laser, et une partie externe métallique (ou monture) en contact avec la partie interne.

Selon une variante, la partie interne du corps de refroidissement est formée par un matériau métallique dont la température de fusion est inférieure à celle du matériau métallique dont est formée la partie externe. Les matériaux métalliques peuvent être des métaux ou des alliages. Dans le cas d'alliages, on utilisera le terme « température de fusion » pour évoquer la température de *solidus* de l'alliage, limite de température sous laquelle il ne subsiste que du solide.

Par exemple, la partie interne du corps de refroidissement est un alliage composé majoritairement d'étain et la partie externe du corps de refroidissement est un composé métallique à base de cuivre, de fer, de zinc, d'aluminium, d'argent, d'or, de platine ou d'étain.

Selon une variante, le module à gain laser comprend une couche d'accroche métallique entre la partie interne du corps de refroidissement et le barreau laser, permettant de faciliter l'accroche du matériau métallique lors du moulage autour du barreau.

Selon un second mode de réalisation préféré de l'invention, le corps de refroidissement est formé en une seule partie métallique moulée autour du barreau laser.

Par exemple, le matériau métallique dont est formé le corps de refroidissement est un composé métallique à base de cuivre, de fer, de zinc, d'aluminium, d'argent, d'or, de platine ou d'étain.

Selon une variante de l'invention, le barreau laser est de forme cylindrique, la forme cylindrique étant particulièrement bien adaptée à la géométrie des faisceaux optiques (pompe et laser) qui sont typiquement à symétrie de révolution.

Par exemple, le barreau laser est une fibre cristalline.

Selon des variantes du premier aspect de l'invention, le barreau laser est un cristal ou une céramique, de type Oxyde (par exemple du YAG), Vanadate (par exemple du YVO₄) Fluorure (par exemple du CaF₂), ou Tungstate (par exemple du KYW), ou un verre à base de silice. Ce barreau est par exemple dopé par des ions terres rares comme du Nd³⁺, Yb³⁺ ou Er³⁺.

Selon une variante, les interfaces optiques forment avec l'axe du barreau laser un angle défini, par exemple entre 50° et 70°, correspondant à l'angle de Brewster du matériau laser considéré. L'inclinaison à Brewster des interfaces optiques par rapport à l'axe optique permet de limiter les pertes de Fresnel subies par les faisceaux optiques polarisés sans utiliser de couches diélectriques.

Selon une autre variante, les interfaces optiques du barreau laser comprennent un revêtement diélectrique, ce revêtement permettant de limiter les pertes de Fresnel sur les interfaces optiques ou d'agir comme un miroir.

Selon une variante, le corps de refroidissement est structuré pour la circulation d'un fluide de refroidissement.

Selon un deuxième aspect, l'invention concerne un élément à gain laser comprenant un module à gain laser selon le premier aspect, et un bloc de refroidissement fixé au module à gain laser et structuré pour la circulation d'un fluide de refroidissement. Le bloc de refroidissement permet d'évacuer la chaleur vers l'extérieur. Il comprend par exemple des ailettes pour un refroidissement à air, ou une circulation pour un liquide caloporteur.

Selon un troisième aspect, l'invention concerne un système laser solide comprenant un module à gain laser selon le premier aspect ou un élément à gain laser selon le deuxième aspect.

Selon une variante, le système laser solide comprend en outre une source d'émission d'un faisceau pompe destiné au pompage longitudinal ou quasi-longitudinal du barreau laser, ainsi que des éléments réfléchissants disposés de part et d'autre du module à gain laser (ou de l'élément à gain laser) pour former une cavité, l'ensemble formant ainsi un oscillateur laser.

Selon une variante, le système laser solide comprend en outre une source laser et des éléments optiques pour former un système laser amplifié ou MOPA, selon l'abréviation de l'expression anglo-saxonne « Master Oscillator Power Amplifier ».

Selon un quatrième aspect, l'invention concerne une méthode de fabrication d'un module à gain laser. Ladite méthode comprend la mise en contact d'un barreau laser avec un composé métallique; le chauffage de l'ensemble barreau-composé métallique à une température au moins égale à la température de fusion du composé métallique, permettant au composé métallique de se mouler tout autour du barreau laser ; le refroidissement de l'ensemble barreau-composé métallique à une température inférieure à la température de fusion du composé métallique pour former un bloc non démontable à température ambiante ; et la découpe et le polissage de l'ensemble barreau-composé métallique pour former deux interfaces optiques agencées en vis-à-vis, l'ensemble des surfaces autres que les interfaces optiques étant recouvert par le composé métallique.

Selon une variante, le composé métallique avec lequel le barreau laser est mis en contact est solide et le chauffage de l'ensemble barreau-composé métallique permet la liquéfaction au moins partielle du composé métallique et le moulage du composé ainsi liquéfié autour du barreau.

Selon une autre variante, le composé métallique avec lequel le barreau laser est mis en contact est liquide ou partiellement liquide et le chauffage de l'ensemble barreau-composé métallique permet au composé métallique de rester sous forme liquide et de venir se mouler autour du barreau.

Selon un premier mode de réalisation préféré de l'invention, la méthode de fabrication selon le quatrième aspect comprend le dépôt du barreau laser dans une encoche d'un corps de refroidissement en matériau métallique avant la mise en contact avec le composé métallique, le composé métallique ayant une température de fusion inférieure à celle du matériau dont est formé le corps de refroidissement.

Selon une variante du premier mode de réalisation, la méthode de fabrication comprend en outre, avant la mise en contact avec le composé métallique, la couverture de l'ensemble des surfaces autres que les interfaces optiques du barreau laser avec une peinture métallique permettant l'accroche du composé métallique sous forme liquide, et le séchage de la peinture métallique déposée sur le barreau laser pour obtenir une couche métallique d'accroche autour du barreau laser.

Selon une autre variante, lorsqu'une couche d'oxyde apparaît sur la couche métallique d'accroche, la méthode de fabrication comprend en outre le nettoyage de la couche d'oxyde.

Selon un second mode de réalisation préféré de l'invention, la méthode de fabrication selon le quatrième aspect comprend le dépôt du barreau laser dans un creuset avant la mise en contact avec le composé métallique, le chauffage du creuset contenant l'ensemble barreau-composé métallique à une température au moins égale à la température de fusion du composé métallique, et le démoulage de l'ensemble barreau-composé métallique après le refroidissement.

Par exemple, le creuset est en graphite pour permettre un démoulage facile de l'ensemble formé par le barreau laser et le composé métallique.

Selon des variantes, le composé métallique se présente sous forme de poudre, de tiges ou de copeaux.

Selon une variante du second mode de réalisation, l'étape de chauffage est réalisée dans une enceinte sous atmosphère contrôlée pour empêcher l'oxydation du composé métallique pendant le chauffage.

Selon une variante, la découpe de l'ensemble barreau-composé métallique est réalisée selon l'angle de Brewster du matériau dont est formé le barreau laser.

Selon une variante, la méthode de fabrication comprend en outre l'application d'un revêtement diélectrique sur au moins une des interfaces optiques du barreau laser.

### Brève description des figures

D'autres caractéristiques et avantages de l'invention apparaîtront à la lecture de la description qui suit, illustrée par les figures sur lesquelles :

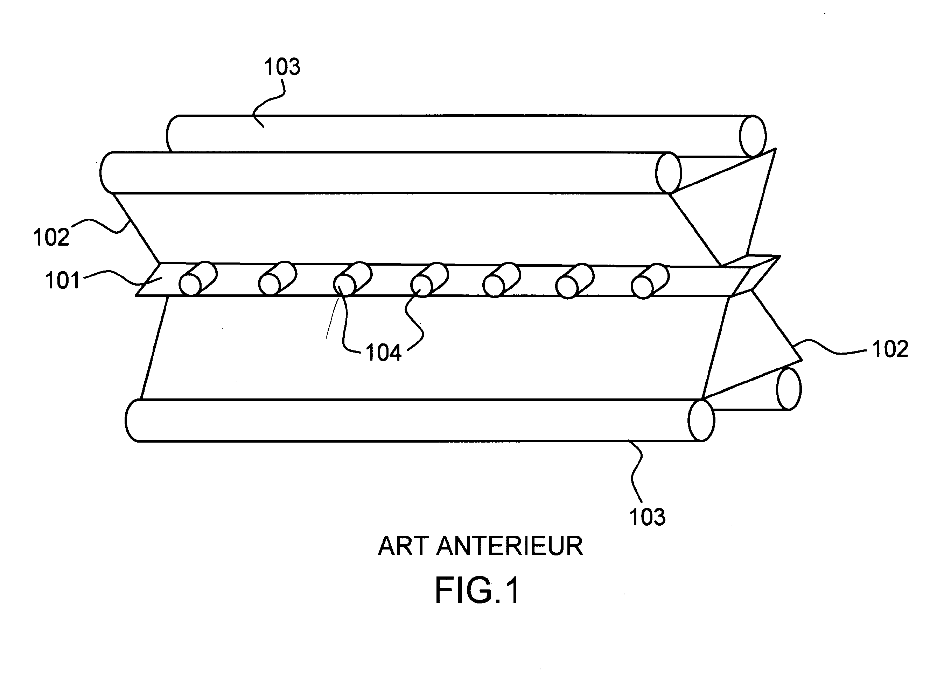

La Figure 1 représente un système laser connu comprenant un barreau laser comme milieu actif.
La Figure 2 représente un schéma d'un module à gain laser selon un premier mode de réalisation de l'invention.
La Figure 3 représente un schéma d'un module à gain laser selon un second mode de réalisation de l'invention.
La Figure 4 illustre un exemple de méthode de fabrication du module à gain laser selon un mode de réalisation de l'invention.
La Figure 5 illustre un exemple de méthode de fabrication du module à gain laser selon un autre mode de réalisation de l'invention.
Les figures 6A à 6D montrent des images de faisceau laser obtenues expérimentalement entre polariseurs parallèles ou croisés, dans un module selon l'art antérieur et dans un module selon l'invention.
La figure 7 montre une image obtenue par caméra thermique de la face pompée d'une fibre cristalline de Nd :YAG agencée dans un module à gain laser selon l'invention.
Les figures 8A et 8B montrent la répartition en température calculée dans un module à gain laser contenant un cristal de section carrée, dans le cas d'un refroidissement par deux cotés et par quatre cotés.
Les Figures 9A et 9B représentent des éléments à gain laser comprenant un module à gain laser selon deux variantes.
La Figure 10 représente un système laser selon un mode de réalisation de l'invention.
La Figure 11 représente un système laser selon un autre mode de l'invention.

### Description détaillée

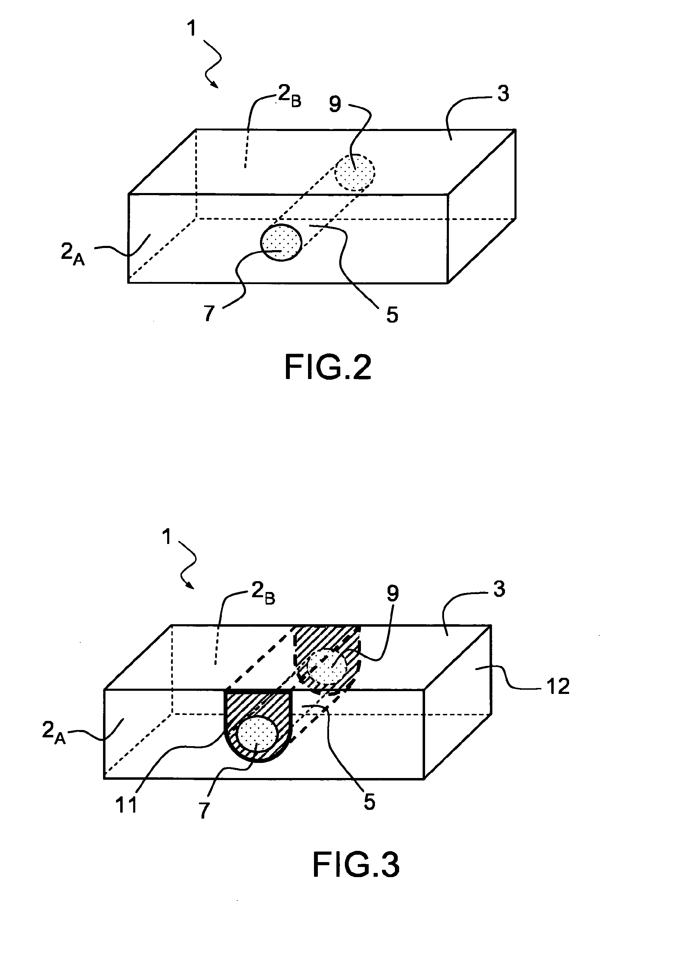

Les Figures 2 et 3 représentent des vues schématiques d'un module à gain laser selon deux modes de réalisation de l'invention. Le module à gain 1 comprend un barreau laser 5 ainsi qu'une monture métallique 3 maintenant le barreau. La monture métallique 3 sert de corps de refroidissement pour le barreau laser 5, permettant d'évacuer la chaleur produite dans le barreau et due au pompage optique. Le barreau présente deux extrémités 7, 9. Ces extrémités sont des surfaces polies qui constituent des interfaces optiques. Le barreau laser 5 est destiné à un pompage optique longitudinal ou quasi-longitudinal par un faisceau de pompe incident selon l'une et/ou l'autre des interfaces optiques 7,9. Avantageusement, le barreau présente un axe de symétrie, le pompage pouvant être réalisé sensiblement selon l'axe de symétrie du barreau. Par exemple, le barreau est sensiblement cylindrique, l'axe du cylindre étant confondu avec l'axe optique. Les interfaces optiques ne sont pas couvertes par la monture métallique 3. Les interfaces optiques 7, 9 sont des faces d'entrée et/ou de sortie du faisceau pompe et du faisceau laser. Les interfaces optiques 7, 9 peuvent, en outre, être traitées avec des couches minces possédant une fonction optique (typiquement antireflet ou miroir hautement réfléchissant) pour des longueurs d'onde choisies. Les surfaces du barreau 5 autres que les interfaces optiques sont totalement recouvertes par le corps de refroidissement 3, permettant une évacuation de la chaleur parfaitement homogène.

La Figure 2 illustre un premier mode de réalisation. Dans cet exemple, la monture métallique, ou corps de refroidissement 3, est formée en une seule partie moulée autour du barreau 5 ; elle est avantageusement en contact direct avec les surfaces autres que les interfaces optiques. Ainsi, tout le barreau laser 5 sauf les interfaces optiques 7, 9 est recouvert par le corps de refroidissement 3. Avantageusement, le corps de refroidissement présente une forme généralement parallélépipédique, avec deux faces 2_{A}, 2_{B} en vis-à-vis à travers lesquelles débouche le barreau laser 5, de telle sorte que les interfaces optiques 7, 9 soient dans le même plan que lesdites faces 2_{A}, 2_{B} du corps de refroidissement, typiquement à quelques microns près. La surface du barreau laser qui ne serait pas en contact avec le corps de refroidissement est ainsi très limitée, voire nulle. Dans l'exemple de la figure 2, lesdites faces du corps de refroidissement à travers lesquelles débouche le barreau laser sont parallèles, sensiblement perpendiculaires à l'axe optique du barreau laser. Alternativement, ces faces peuvent être inclinées par rapport à l'axe optique du barreau, les interfaces optiques restant sensiblement dans le même plan que lesdites faces. Le module à gain laser 1 forme ainsi un bloc solide indémontable à température ambiante.

Dans l'exemple de la figure 3, un module à gain laser selon un deuxième mode de réalisation de l'invention est illustré. Le corps de refroidissement 3 est formé en deux parties, une partie interne 11 et une partie externe 12 en contact avec la partie interne. La partie interne 11 du corps de refroidissement 3 est formé en un matériau métallique dont la température de fusion (ou température de solidus dans le cas d'un alliage) est inférieure à celle du matériau métallique dont est formée la partie externe 12. Tout le barreau laser 5 est dans cet exemple couvert par la partie interne 11 du corps de refroidissement 3, sauf les interfaces optiques 7, 9. Le module à gain laser 1 ainsi réalisé forme un bloc indémontable. Il est par exemple de forme parallélépipédique, avec comme dans l'exemple de la figure 2, deux faces 2_{A}, 2_{B} en vis à vis à travers lesquelles débouche le barreau laser. Les interfaces optiques 7, 9 sont, comme dans le premier mode de réalisation, dans le même plan que lesdites faces du corps de refroidissement à travers lesquelles débouche le barreau laser. Ces faces peuvent être parallèles entre elles, sensiblement perpendiculaires à l'axe optique du barreau, ou présenter un angle d'inclinaison par rapport à l'axe optique du barreau.

Dans les modes de réalisation représentés sur les Figures 2 et 3, le matériau dont est formée la partie du corps de refroidissement 3 destinée à être moulée autour du barreau laser 5 a une température de fusion inférieure à celle du barreau laser. Elle peut être, par exemple, de l'ordre de 200°C à 600 °C. Le corps de refroidissement 3 du premier mode de réalisation et la partie externe 12 du deuxième mode de réalisation peuvent être, par exemple, en un matériau à base de cuivre, d'aluminium, de fer, de zinc, d'argent, d'or, de platine ou d'étain, ou tout autre matériau ayant une bonne conductivité thermique, c'est-à-dire typiquement supérieure à 100 W.m⁻¹.K⁻¹. La partie interne 11 du corps de refroidissement 3 du deuxième mode de réalisation peut être, par exemple, formée par un matériau de brasage, par exemple de l'argent, ou un mélange à base d'étain et d'argent, ou tout autre composé métallique ayant une bonne conductivité thermique et dont la température de fusion est inférieure à celle du matériau de la partie externe 12.

Le corps de refroidissement peut, en outre, être structuré pour la circulation d'un fluide de refroidissement. Par exemple, des conduits pour un liquide caloporteur ou des ailettes métalliques permettant une dissipation de la chaleur par air peuvent être prévus dans le corps de refroidissement.

Le barreau laser 5 peut être, par exemple, en un matériau cristallin, comme un oxyde (par exemple du YAG), un vanadate (par exemple du YVO₄), un fluorure (par exemple du CaF₂) ou un tungstate (par exemple du KYW). Le cristal peut être dopé avec des ions terres rares ou des ions métalliques, comme Nd³⁺,Yb³⁺,Er³⁺,Tm³⁺,ou Ho³⁺.

Comme expliqué en référence aux figures 2 et 3, les interfaces optiques 7, 9 du barreau 5 peuvent être perpendiculaires à l'axe optique, ou biaisées par rapport à celui-ci. Par exemple, les interfaces optiques peuvent être coupées selon l'angle de Brewster du matériau du barreau, permettant ainsi de limiter les pertes de Fresnel des faisceaux optiques polarisés entrant ou sortant dans le barreau. Les interfaces optiques peuvent aussi être polies de façon sphérique ou asphérique, pour modifier la divergence des faisceaux optiques. Le barreau laser peut avoir des formes diverses. La dimension maximale de la section du barreau peut par exemple varier de quelques dizaines de micromètres à plusieurs centimètres, et la longueur du barreau, par exemple, de quelques millimètres à plusieurs dizaines de centimètres. En particulier, le barreau laser peut se présenter sous forme d'une fibre cristalline de section circulaire, la fibre cristalline (de diamètre typique 1 millimètre) permettant le guidage d'un rayonnement optique longitudinal par réflexions totales internes.

Du fait que le corps de refroidissement recouvre toutes les surfaces autres que les interfaces optiques du barreau laser, un refroidissement homogène de l'ensemble du barreau peut être obtenu. Notamment, le coefficient de transfert thermique est homogène sur toutes les surfaces refroidies du barreau. En choisissant comme matériau métallique en contact direct avec le barreau laser un matériau ayant une très bonne conductivité thermique (environ 100 à 400 W.m⁻¹.K⁻¹), l'efficacité d'évacuation de la chaleur produite par le pompage dans le barreau peut être optimisée. Ainsi, il est possible d'utiliser des puissances de pompage plus fortes (de l'ordre de 200 à 500 W au lieu de 30-40 W dans des systèmes connus) pour obtenir une radiation laser à très haute puissance (de l'ordre de 100 W en puissance moyenne, et de plusieurs Mégawatts en puissance crête). Le module à gain laser, ne comportant pas de composants assujettis au dégazage et au vieillissement rapide, a une durée de vie estimée de plusieurs dizaines d'années. En particulier, le module ne vieillit pas sur l'échelle de temps de durée de vie d'un système laser dans lequel il peut être intégré (voir ci-dessous). De plus, le module à gain laser selon les modes de réalisation décrits constitue un bloc indémontable mécaniquement. Ceci permet avantageusement d'éviter un dérèglement de la position du barreau laser dans sa monture, le module présentant en même temps une très bonne tenue aux chocs mécaniques. Enfin, le module à gain laser décrit permet de réduire fortement les contraintes mécaniques subies par le barreau laser par rapport aux montures utilisant une pression mécanique sur le barreau pour assurer un bon contact thermique.

Des méthodes de fabrication d'un module à gain laser selon des modes de réalisation de l'invention sont décrites ci-dessous.

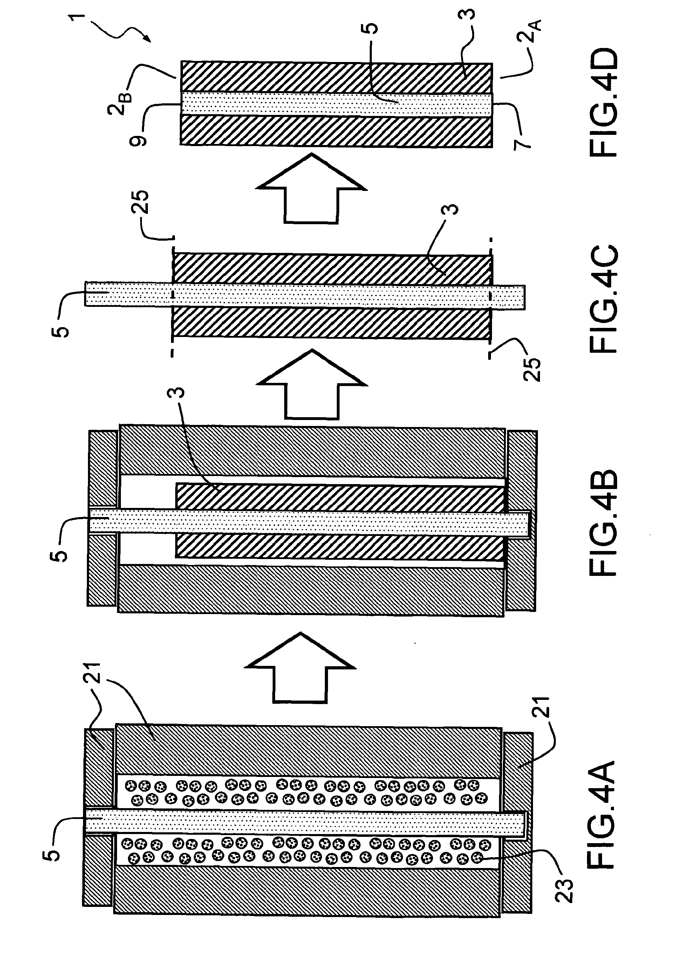

Selon un mode de réalisation illustré sur la figure 4, un module à gain laser est fabriqué par un procédé de moulage. Dans un premier temps, un barreau laser 5 est mis dans un creuset ou moule 21 de façon à ce qu'il soit tenu dans le creuset par ses extrémités. Le creuset 21 est ensuite rempli (figure 4A) par un composé métallique de moulage 23 (métal ou alliage métallique) sous forme solide, par exemple sous forme de copeaux, de tiges ou de poudre, ou sous forme liquide (métal en fusion). Les extrémités du barreau 5 ne sont pas en contact avec le composé métallique de moulage 23. Le creuset 21 est ensuite chauffé à une température au moins égale à la température de fusion du composé métallique de moulage. Plus précisément, lorsque le composé métallique est un métal pur, le creuset est chauffé à une température supérieure à la température de fusion du métal (mais inférieure à la température de fusion du creuset). S'il s'agit d'un alliage, le creuset est chauffé à une température supérieure à la température de solidus de l'alliage, de telle sorte que le composé métallique de moulage soit au moins partiellement liquide et reste liquide le temps nécessaire pour pouvoir se mouler parfaitement autour du barreau. La température de chauffe du creuset est, par exemple, d'environ 600 °C à 1000 °C. Le creuset quant à lui est fait en un matériau dont la température de fusion est supérieure à celle du composé métallique de moulage et sur lequel le composé métallique de moulage fondu n'accroche pas. Par exemple, le creuset est réalisé en carbone vitreux. Le procédé de moulage peut être réalisé dans une enceinte placée sous atmosphère contrôlée pour éviter l'oxydation du composé métallique de moulage sous haute température. Le creuset est maintenu en température le temps nécessaire, typiquement quelques minutes pour assurer la liquéfaction - au moins partielle - ou le maintien sous forme liquide du métal de moulage 23 et le moulage autour du barreau laser 5. Il est possible de déposer sur le barreau laser une couche d'accroche métallique pour faciliter l'accroche du composé métallique sur le barreau. Le creuset ainsi rempli est ensuite refroidi à température ambiante (figure 4B), permettant au composé métallique de moulage de se solidifier et de former un corps de refroidissement 3 directement moulé autour du barreau 5. En se refroidissant, le composé métallique de moulage accroché au barreau laser voit son volume diminuer, l'ensemble barreau-métal ainsi formé pouvant de ce fait facilement être démoulé du creuset (figure 4C). L'ensemble barreau métal, une fois retiré du creuset, est découpé (figure 4D) de façon à ce que les surfaces 7, 9 de l'extrémité du barreau laser 5 se trouvent dans le même plan que les surfaces 2_{A}, 2_{B} du corps de refroidissement à travers lesquelles le barreau laser débouche. Le module ainsi obtenu forme un bloc non démontable à température ambiante. Les surfaces des extrémités du barreau sont ensuite soumis à un polissage optique afin d'obtenir des interfaces optiques 7, 9 agencées en vis-à-vis de part et d'autre du barreau 5. La forme du module obtenu par cette méthode dépend de la forme du creuset utilisé. Par exemple, il est possible d'obtenir un module de forme parallélépipédique ou cylindrique en utilisant un moule de forme adapté.

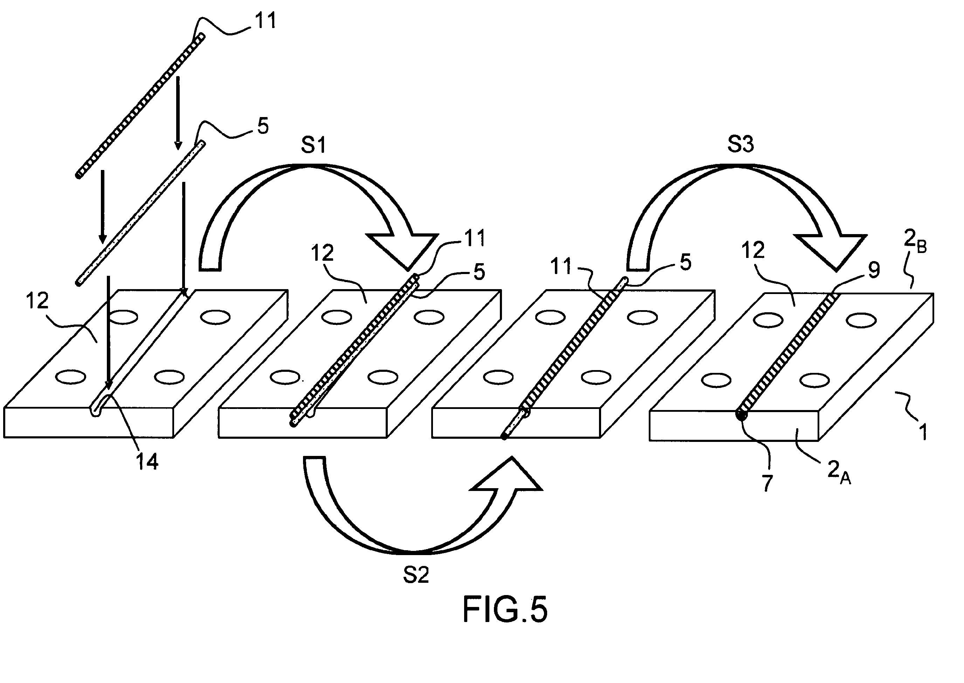

Un autre mode de réalisation d'une méthode de fabrication d'un module laser selon l'invention est représenté sur la figure 5. Un barreau laser 5 est placé dans une encoche 14 d'une monture 12 formée en un composé métallique. De préférence, le barreau dépasse légèrement de la monture 12 en longueur. Ensuite, un matériau de brasage métallique 11 sous forme solide ou liquide est mis en contact avec le barreau dans l'encoche (étape S1). Le matériau de brasage peut se présenter, par exemple, sous forme d'un fil de soudure métallique. L'ensemble barreau-métal est chauffé à une température au moins égale à la température de fusion du matériau de brasage. Le composé métallique de brasage liquéfié entoure alors le barreau sur toute la surface en contact avec le composé métallique de brasage (étape S2). De préférence, pendant cette étape, le barreau est maintenu au fond de l'encoche pour éviter qu'il ne flotte au dessus du composé métallique liquide. L'ensemble barreau-métal est ensuite refroidi pour permettre au composé métallique de brasage de se solidifier autour du barreau et dans l'encoche. L'ensemble est découpé de façon à ce que les surfaces de l'extrémité du barreau laser se trouvent dans le même plan que les faces 2_{A}, 2_{B} de la monture métallique 12, typiquement à quelques microns près, assurant ainsi que l'ensemble des surfaces autres que les interfaces optiques soient recouvertes par le corps de refroidissement (étape S3). Le module à gain laser 1 alors obtenu forme un bloc non démontable à température ambiante. Les surfaces des extrémités du barreau peuvent être soumis à un polissage optique afin d'obtenir des interfaces optiques agencées en vis-à-vis.

Selon une variante, préalablement à la mise en contact du barreau laser avec le matériau métallique de brasage, le barreau peut subir une ou plusieurs étapes de préparation. Par exemple, le barreau peut avoir été préalablement recouvert d'une peinture métallique contenant des particules métalliques choisies pour permettre l'accroche du matériau de brasage. Le barreau recouvert est chauffé dans un four à plusieurs centaines de degrés pour sécher la peinture, laissant une fine couche d'accroche métallique autour du barreau. Il peut être nécessaire de nettoyer le barreau recouvert de la couche d'accroche d'une éventuelle couche d'oxyde qui se serait formée pendant le séchage de la peinture. Le barreau peut ensuite être recouvert d'une pâte protectrice sur les surfaces qui ne sont pas destinées à être recouvert par le composé métallique de brasage. Ainsi, il est possible d'utiliser directement un barreau laser possédant des interfaces optiques polies. Le barreau laser ainsi préparé est mis en contact avec le matériau métallique de brasage (étape S1).

Selon une variante, afin d'empêcher l'oxydation du composé métallique de brasage à haute température, un gel décapant adapté au brasage peut aussi être déposé dans l'encoche avant le chauffage. Un étamage dans l'encoche de la monture 12, avant positionnement du barreau laser, peut aider à répartir correctement le matériau de brasage autour du barreau.

Le barreau laser peut avoir un grand nombre de formes et dimensions. Par exemple, le barreau peut avoir une section circulaire, carrée, rectangulaire ou polygonale.

Dans les deux modes de réalisation de méthode de réalisation d'un module à gain laser décrits ci-dessus, le composé métallique liquéfié peut s'adapter parfaitement à la forme et aux aspérités du barreau laser. Ainsi, il est possible de réaliser une adaptation mécanique optimale entre le barreau et le composé métallique qui l'entoure. Une fois le composé métallique solidifié, il garde un très bon contact direct avec le barreau, ce qui permet d'obtenir également un très bon contact thermique entre ces deux milieux. Par exemple, pour un barreau laser cylindrique en Nd:YAG de 1 mm de diamètre et de 50 mm de long, et un corps de refroidissement en cuivre, un coefficient de transfert thermique supérieur à 5 W.cm⁻².K⁻¹ est obtenu. De plus, grâce aux méthodes décrites, les contraintes mécaniques exercées sur le barreau laser sont minimisées.

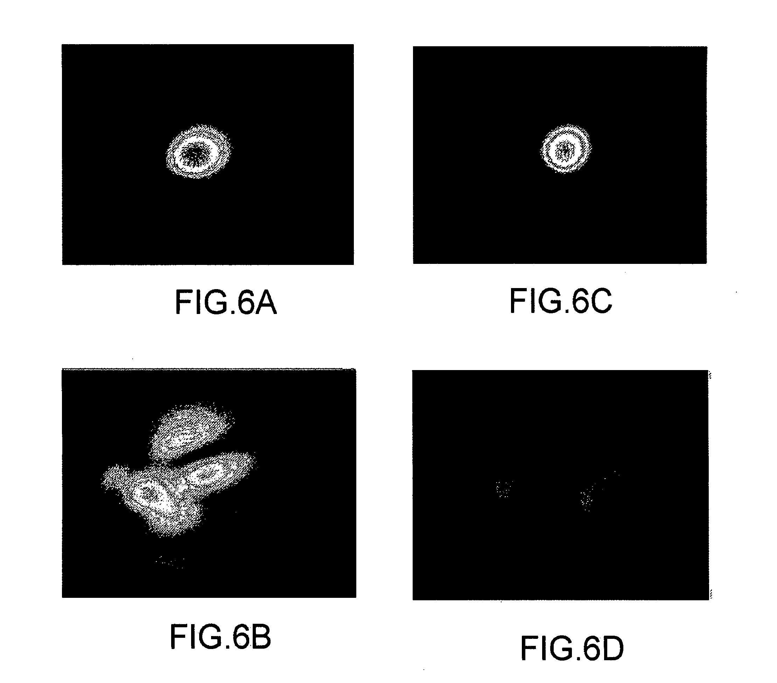

Les figures 6A à 6D montrent les figures de transmission obtenues après double passage d'un faisceau gaussien à 1064 nm dans une fibre cristalline de Nd :YAG de diamètre 1 mm et de longueur 50 mm placée entre un polariseur et un analyseur, sans pompage optique. Les figures 6A et 6B montrent les figures de transmission obtenues dans le cas d'une fibre cristalline maintenue par pression entre 2 plaques de cuivre serrées entre elles par des vis, avec une rainure adaptée à la forme de la fibre, dans le cas où le polariseur et l'analyseur sont parallèles (6A) et dans le cas où ils sont croisés (6B). Les figures 6C et 6D montrent les mêmes figures dans le cas où la fibre cristalline Nd :YAG est installée dans un module selon l'invention proposée. Dans le cas où la fibre cristalline est maintenue par pression mécanique entre deux plaques de cuivre, on observe entre polariseurs et analyseurs parallèles (figure 6A), une légère déformation du faisceau transmis. Entre polariseurs et analyseurs croisés (figure 6B), on observe une transmission d'environ 15% et une figure de transmission qui est caractéristique de pertes par dépolarisation, provoquées par un effet de biréfringence localisé, lui-même induit par des contraintes mécaniques. Dans le cas de la fibre cristalline agencée dans un module à gain laser selon l'invention, on observe entre polariseurs et analyseurs parallèles (figure 6C) une très bonne transmission du faisceau gaussien après le double passage. Entre polariseurs et analyseurs croisés (figure 6D), on observe une transmission extrêmement faible (inférieure à 1%) et une figure de transmission quasiment vide, démontrant l'absence d'effets de dépolarisation dans la fibre cristalline.

Ces résultats expérimentaux mettent en évidence une réduction importante des contraintes mécaniques subies par les barreaux laser dans un module à gain laser selon l'invention en comparaison avec des méthodes de refroidissement classiques, dans lesquelles le contact thermique est établi en appliquant une pression du barreau laser contre son élément de refroidissement.

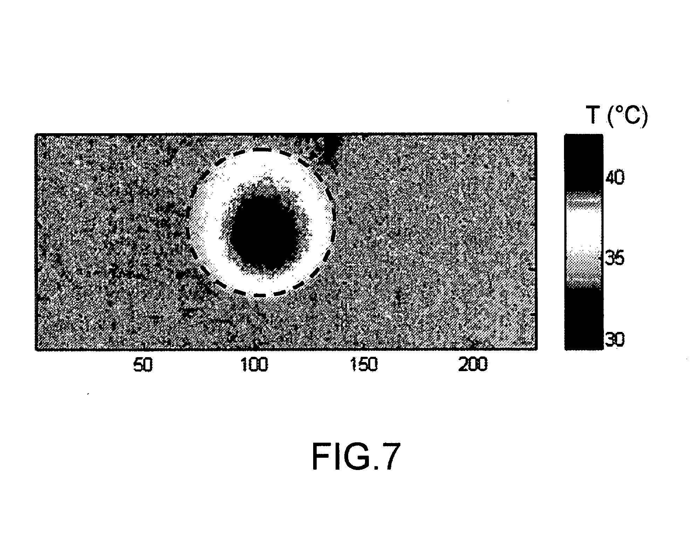

La figure 7 montre par ailleurs une image obtenue par caméra thermique de la face pompée d'une fibre cristalline de Nd :YAG de diamètre 1 mm, de longueur 50 mm, de dopage 0.20% at., recevant 70 W de pompe d'une diode laser émettant à 808 nm. On remarque l'excellente symétrie radiale du refroidissement obtenu, preuve de l'homogénéité du contact thermique obtenu, ainsi que l'absence de décalage entre la température du bord du barreau laser et la température de la monture en cuivre, preuve d'un coefficient de transfert thermique élevé (estimé à 5 W.cm⁻².K⁻¹).

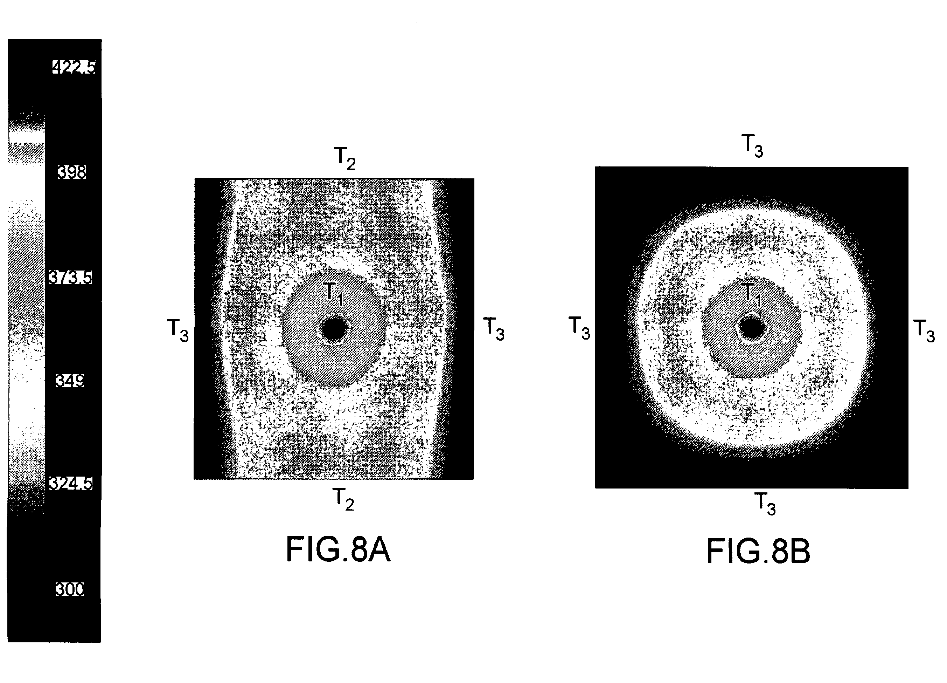

Les figures 8A et 8B montrent les résultats d'une simulation par éléments finis de la température dans un cristal d'Yb : YAG. On simule un cristal d'Yb :YAG, pompé longitudinalement par une diode laser fibrée d'ouverture numérique 0,2, de puissance 200 W, focalisée à 0,5 mm de profondeur dans le cristal, avec un diamètre de faisceau de 300 µm au point de focalisation. Le cristal fait 3x3 mm de section et 15 mm de long, il est dopé 2.5% at. La figure 8A montre un cristal refroidi radialement sur seulement deux cotés (température T₃), les autres côtés n'étant pas refroidis (température T₂). La simulation considère un refroidissement idéal, c'est-à-dire une résistance thermique nulle entre le cristal et le refroidisseur au niveau des surfaces refroidies. Les images représentent la face pompée du cristal, vue de face. On remarque un écart important de température entre les faces refroidies et les faces non refroidies (30 Kelvins d'écart), pour une température maximale de 422 K au centre (température T₁) de la face pompée du cristal. De plus, on tire de ces simulations l'aspect de la lentille thermique. On calcule ainsi que le cristal équivaut à une lentille de focale 100 mm selon l'axe refroidi, alors qu'il équivaut à une lentille de focale 90 mm selon l'axe non refroidi. On constate donc un fort astigmatisme de la lentille thermique. Dans le cas de la figure 8B, où l'ensemble des côtés est refroidi (température T₃), on mesure une lentille thermique d'environ 120 mm, égale selon les deux axes, avec une température maximale T₁ de 408 K au centre de la face pompée du cristal. La lentille thermique obtenue ne présente pas d'aberrations.

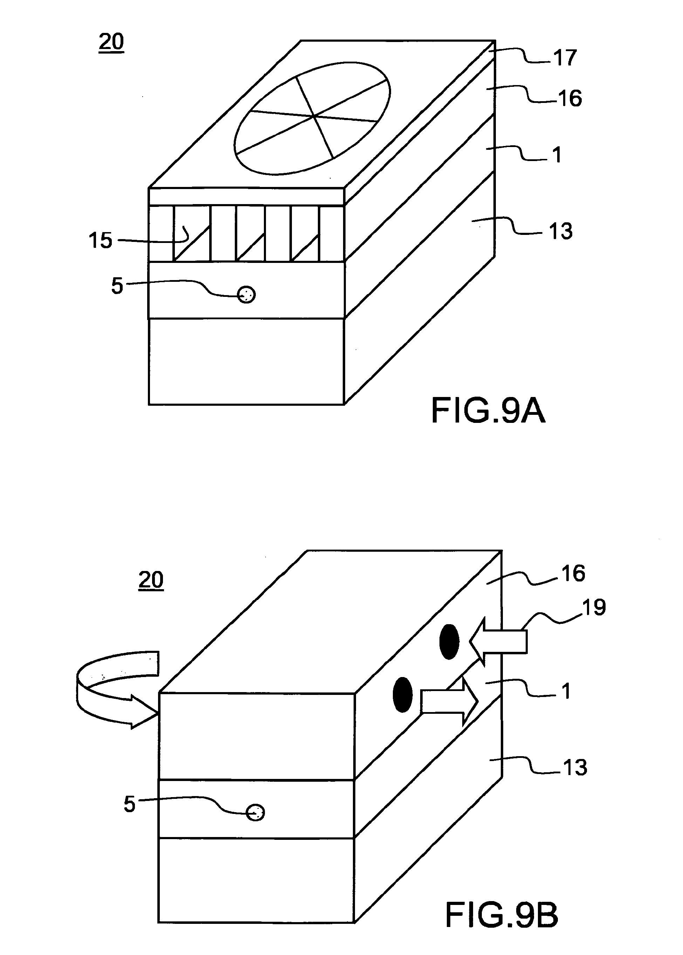

En référence aux Figures 9A et 9B, des exemples d'éléments à gain laser selon deux modes de réalisation sont décrits. Les Figure 9A et 9B représentent chacune un élément à gain laser 20 comprenant un module à gain laser 1 selon l'invention ainsi qu'une semelle de fixation 13 et un bloc de refroidissement 16. Selon un premier mode de réalisation montré sur la Figure 9A, le bloc de refroidissement comprend des ailettes 15 ainsi qu'un ventilateur 17 pour permettre la dissipation de la chaleur par air. Le bloc de refroidissement peut aussi uniquement comporter les ailettes. Les ailettes sont de préférence métalliques, et elles sont fixées sur le module à gain laser 1. Selon un deuxième mode de réalisation montré sur la Figure 9B, le bloc de refroidissement 16 comprend des tuyaux de circulation d'un fluide 19. Ce fluide peut être un liquide, par exemple, de l'eau, ou tout autre liquide caloporteur ayant une capacité thermique élevée. Le bloc de refroidissement est avantageusement un bloc en métal fixé sur le module à gain laser 1. Il est également possible de placer un élément Peltier entre le module à gain laser et le bloc de refroidissement pour améliorer l'extraction de la chaleur.

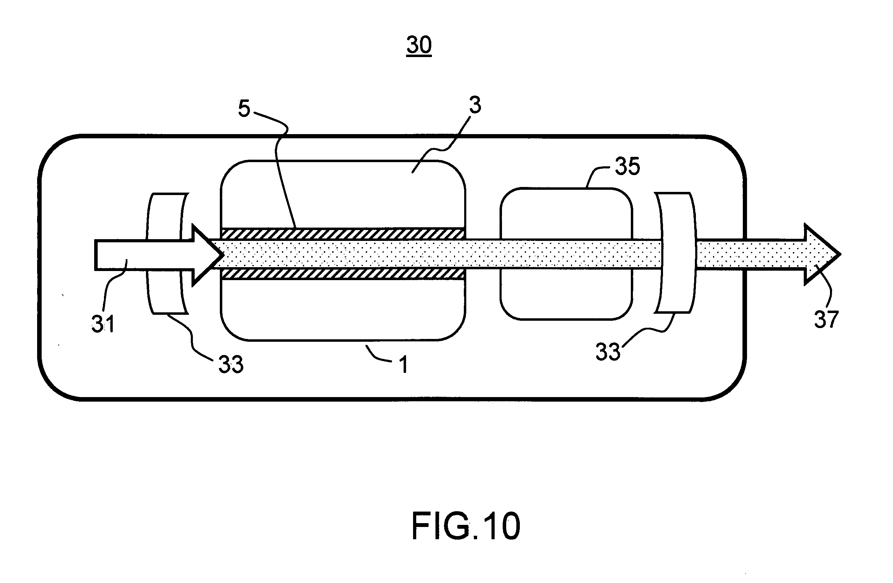

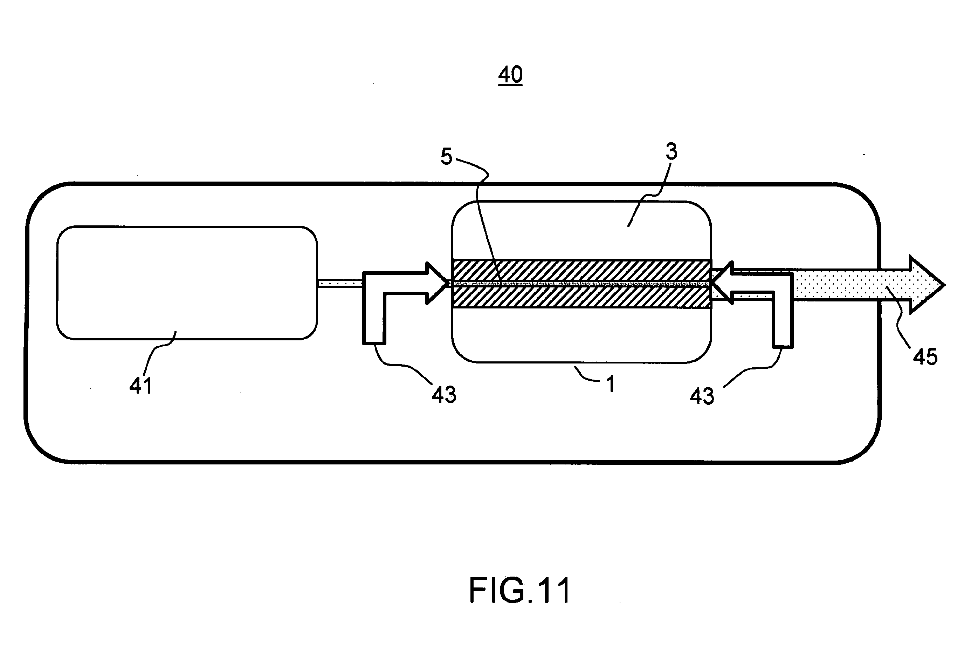

Les Figures 10 et 11 représentent des systèmes laser selon des modes de réalisation de l'invention.

La Figure 10 montre schématiquement un système laser 30 comprenant un module à gain laser 1 selon l'invention avec un barreau laser 5 et un corps de refroidissement 3, ainsi qu'une cavité formé par des miroirs 33 et un modulateur optique 35 permettant au laser de fonctionner en régime déclenché. Le barreau laser est pompé longitudinalement par un faisceau lumineux 31 pour générer un faisceau laser 37.

La Figure 11 montre un autre exemple d'un système laser 40 selon l'invention. Le système 40 comprend une source laser 41 dont la radiation est amplifiée par un module à gain laser selon l'invention. La radiation laser du laser 41 se propage dans le barreau 5 qui est pompé longitudinalement par un ou plusieurs faisceaux de pompe 43 entrant par une ou par les deux interfaces optiques du barreau 5. La radiation du laser 41 de faible puissance est ainsi amplifiée pour produire un faisceau laser 45 de sortie de forte puissance.

Bien que décrite à travers un certain nombre d'exemples de réalisation détaillés, le module à gain laser et la méthode de réalisation d'un module à gain laser selon l'invention comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent.

## Revendications

1. Module à gain laser (1) comprenant :
- un barreau laser (5) comprenant deux interfaces optiques (7, 9) agencées en vis-à-vis, le barreau (5) étant destiné à un pompage optique longitudinal ou quasi-longitudinal, et
- un corps de refroidissement métallique (3) dont au moins une partie est moulée autour du barreau laser (5) pour recouvrir l'ensemble des surfaces autres que les interfaces optiques de manière à ce que le module à gain laser (1) forme un corps solide non démontable à température ambiante.

2. Module à gain laser selon la revendication 1, dans lequel le corps de refroidissement (3) comprend une partie interne (11) en matériau métallique moulée autour du barreau laser (5), et une partie externe (12) en matériau métallique en contact avec la partie interne (11), la température de fusion du matériau formant la partie interne étant inférieure à la température de fusion du matériau formant la partie externe.

3. Module à gain laser selon l'une des revendications 1 ou 2, comprenant une couche d'accroche métallique entre la partie interne (11) du corps de refroidissement (3) et le barreau laser (5).

4. Module à gain laser selon l'une des revendications 2 ou 3, dans lequel le matériau formant la partie externe (12) du corps de refroidissement (3) est un alliage à base de cuivre, de fer, de zinc, d'aluminium, d'argent, d'or, de platine ou d'étain.

5. Module à gain laser selon la revendication 1, dans lequel le corps de refroidissement (3) est formé d'un seul matériau en une seule partie moulée autour du barreau laser (5).

6. Module à gain laser selon la revendication 5, dans lequel le matériau formant le corps de refroidissement (3) est en un alliage à base de cuivre, de fer, de zinc, d'aluminium, d'argent, d'or, de platine ou d'étain.

7. Module à gain laser selon l'une quelconque des revendications précédentes, dans lequel le barreau laser (5) est une fibre cristalline, dont la matrice cristalline est un oxyde, un vanadate, un fluorure, ou un tungstate, et qui contient des ions dopants terre-rares ou métalliques.

8. Module à gain laser selon l'une quelconque des revendications précédentes, dans laquelle les interfaces optiques (7, 9) du barreau laser (5) sont recouvertes par un revêtement diélectrique.

9. Élément à gain laser (20) comprenant :
- un module à gain laser (1) selon l'une quelconque des revendications précédentes, et
- un bloc de refroidissement (16) structuré pour la circulation d'un fluide de refroidissement, fixé au module à gain laser (1).

10. Système laser solide (30, 40) comprenant :
- un module à gain laser selon l'une des revendications 1 à 8 ou un élément à gain laser selon la revendication 9,
- une source d'émission d'un faisceau pompe (31, 43) destiné au pompage longitudinal ou quasi-longitudinal du barreau laser (5).

11. Méthode de fabrication d'un module à gain laser (1), comprenant :
- la mise en contact d'un barreau laser (5) avec un composé métallique sous forme solide ou liquide;
- le chauffage de l'ensemble barreau-composé métallique à une température au moins égale à la température de fusion du composé métallique, permettant au composé métallique liquéfié de se mouler autour du barreau laser ;
- le refroidissement de l'ensemble barreau-composé métallique à une température inférieure au point de fusion du composé métallique pour former un corps solide non démontable à température ambiante; et
- la découpe et le polissage de l'ensemble barreau-composé métallique pour former deux interfaces optiques agencées en vis-à-vis, l'ensemble des surfaces autres que les interfaces optiques étant recouvert par le composé métallique.

12. Méthode de fabrication selon la revendication 11, comprenant :
- le dépôt du barreau laser dans une encoche d'une monture en matériau métallique avant la mise en contact avec le composé métallique, le composé métallique ayant une température de fusion inférieure à celle du matériau métallique dont est formée la monture,
- le chauffage de l'ensemble monture/composé métallique/barreau à une température inférieure à celle de la température de fusion du matériau métallique dont est fait la monture, et
- le refroidissement de l'ensemble pour former ledit corps solide non démontable à température ambiante.

13. Méthode de fabrication selon la revendication 12, comprenant en outre, avant la mise en contact avec le composé métallique :
- la couverture de l'ensemble des surfaces autres que les interfaces optiques du barreau laser avec une peinture métallique permettant l'accroche du matériau de brasage, et
- le séchage de la peinture métallique déposée sur le barreau laser pour obtenir une couche métallique d'accroche autour du barreau laser.

14. Méthode de fabrication selon la revendication 11, comprenant :
- le dépôt du barreau laser dans un creuset avant la mise en contact avec le composé métallique,
- le chauffage du creuset contenant ensemble barreau-composé métallique à une température au moins égale à la température de fusion du composé métallique, et
- le démoulage de l'ensemble barreau-composé métallique après le refroidissement.

## Patentansprüche

1. Laserverstärkungsmodul (1), das Folgendes umfasst:
- einen Laserstab (5), der zwei optische Grenzflächen (7, 9) umfasst, die einander gegenüber angeordnet sind, wobei der Stab (5) für ein longitudinales oder quasilongitudinales optisches Pumpen vorgesehen ist, und
- einen Metallkühlkörper (3), von dem ein Teil um den Laserstab (5) herum geformt ist, um die gesamten Oberflächen, bei denen es sich nicht um die optischen Grenzflächen handelt, zu bedecken, so dass das Laserverstärkungsmodul (1) bei Umgebungstemperatur einen nicht demontierbaren, festen Körper bildet.

2. Laserverstärkungsmodul nach Anspruch 1, wobei der Kühlkörper (3) einen inneren Teil (11) aus einem Metallwerkstoff, der um den Laserstab (5) herum geformt ist, und einen äußeren Teil (12) aus einem Metallwerkstoff in Kontakt mit dem inneren Teil (11) umfasst, wobei die Schmelztemperatur des Werkstoffs, der den inneren Teil bildet, niedriger ist als die Schmelztemperatur des Werkstoffs, der den äußeren Teil bildet.

3. Laserverstärkungsmodul nach einem der Ansprüche 1 oder 2, das eine Metallhaftschicht zwischen dem inneren Teil (11) des Kühlkörpers (3) und dem Laserstab (3) umfasst.

4. Laserverstärkungsmodul nach einem der Ansprüche 2 oder 3, wobei es sich bei dem Werkstoff, der den äußeren Teil (12) des Kühlkörpers (3) bildet, um eine Legierung auf der Basis von Kupfer, Eisen, Zink, Aluminium, Silber, Gold, Platin oder Zinn handelt.

5. Laserverstärkungsmodul nach Anspruch 1, wobei der Kühlkörper (3) aus einem einzigen Werkstoff in einem einzigen Teil, das um den Laserstab (5) herum geformt ist, gebildet ist.

6. Laserverstärkungsmodul nach Anspruch 5, wobei es sich bei dem Werkstoff, der den Kühlkörper (3) bildet, um eine Legierung auf der Basis von Kupfer, Eisen, Zink, Aluminium, Silber, Gold, Platin oder Zinn handelt.

7. Laserverstärkungsmodul nach einem der vorhergehenden Ansprüche, wobei der Laserstab (5) eine Kristallfaser ist, deren Kristallmatrix ein Oxid, ein Vanadat, ein Fluorid oder ein Wolframat ist und die Seltenerdmetall- oder Metalldotierionen enthält.

8. Laserverstärkungsmodul nach einem der vorhergehenden Ansprüche, wobei die optischen Grenzflächen (7, 9) des Laserstabs (5) von einer dielektrischen Beschichtung bedeckt werden.

9. Laserverstärkungselement (20), das Folgendes umfasst:
- ein Laserverstärkungsmodul (1) nach einem der vorhergehenden Ansprüche und
- einen Kühlblock (16), der zur Zirkulation eines Kühlmittels strukturiert ist und an dem Laserverstärkungsmodul (1) befestigt ist.

10. Festkörperlasersystem (30, 40), das Folgendes umfasst:
- ein Laserverstärkungsmodul nach einem der Ansprüche 1 bis 8 oder ein Laserverstärkungselement nach Anspruch 9,
- eine Emissionsquelle eines Pumplasers (31, 43), der für das longitudinale oder quasilongitudinale Pumpen des Laserstabs (5) bestimmt ist.

11. Verfahren zur Herstellung eines Laserverstärkungsmoduls (1), wobei das Verfahren Folgendes umfasst:
- Inkontaktbringen eines Laserstabs (5) mit einer Metallverbindung in fester oder flüssiger Form;
- Erhitzen der Einheit aus Stab und Metallverbindung auf eine Temperatur, die kleiner gleich der Schmelztemperatur der Metallverbindung ist, was ermöglicht, dass sich die verflüssigte Metallverbindung um den Laserstab herum formt;
- Abkühlen der Einheit aus Stab und Metallverbindung auf eine Temperatur, die unter dem Schmelzpunkt der Metallverbindung liegt, um bei Umgebungstemperatur einen nicht demontierbaren, festen Körper zu bilden; und
- Zuschneiden und Polieren der Einheit aus Stab und Metallverbindung, um zwei optische Grenzflächen zu bilden, die einander gegenüber angeordnet sind, wobei die gesamten Oberflächen, bei denen es sich nicht um die optischen Grenzflächen handelt, von der Metallverbindung bedeckt werden.

12. Herstellungsverfahren nach Anspruch 11, das Folgendes umfasst:
- Ablagern des Laserstabs in einer Auskerbung einer Fassung aus einem Metallwerkstoff vor dem Inkontaktbringen mit der Metallverbindung, wobei die Metallverbindung eine Schmelztemperatur hat, die unter der Schmelztemperatur des Metallwerkstoffs, aus dem die Fassung gebildet ist, liegt,
- Erhitzen der Einheit aus Fassung, Metallverbindung und Stab auf eine Temperatur, die unter der Schmelztemperatur des Metallwerkstoffs, aus dem die Fassung hergestellt ist, liegt, und
- Abkühlen der Einheit, um bei Umgebungstemperatur den besagten nicht demontierbaren, festen Körper zu bilden.

13. Herstellungsverfahren nach Anspruch 12, das außerdem vor dem Inkontaktbringen mit der Metallverbindung Folgendes umfasst:
- Abdecken der gesamten Oberflächen, bei denen es sich nicht um die optischen Grenzflächen des Laserstabs handelt, mit einem Metalllack, der das Anhaften des Lötwerkstoffs ermöglicht, und
- Trocknen des auf dem Laserstab abgelagerten Metalllacks, um eine Metallhaftschicht um den Laserstab herum zu erhalten.

14. Herstellungsverfahren nach Anspruch 11, das Folgendes umfasst:
- Ablagern des Laserstabs in einem Tiegel vor dem Inkontaktbringen mit der Metallverbindung,
- Erhitzen des Tiegels, der die Einheit aus Stab und Metallverbindung enthält, auf eine Temperatur, die kleiner gleich der Schmelztemperatur der Metallverbindung ist, und
- Herausnehmen der Einheit aus Stab und Metallverbindung nach dem Abkühlen.

## Claims

1. A laser gain module (1) comprising:
- a laser bar (5) comprising two optical interfaces (7, 9) arranged opposing one another, the bar (5) being intended to undergo a longitudinal or near-longitudinal optical pumping, and
- a metal cooling body (3) at least a part of which is molded around the laser bar (5) so as to cover all of the surfaces other than the optical interfaces in such a manner that the laser gain module (1) forms a non-removable solid body at room temperature.

2. The laser gain module as claimed in claim 1, in which the cooling body (3) comprises an internal part (11) made of metal material molded around the laser bar (5), and an external part (12) made of metal material in contact with the internal part (11), the melting point of the material forming the internal part being lower than the melting point of the material forming the external part.

3. The laser gain module as claimed in either of claims 1 and 2, comprising a metal adhesion layer between the internal part (11) of the cooling body (3) and the laser bar (5).

4. The laser gain module as claimed in either of claims 2 and 3, in which the material forming the external part (12) of the cooling body (3) is an alloy containing copper, iron, zinc, aluminum, silver, gold, platinum or tin.

5. The laser gain module as claimed in claim 1, in which the cooling body (3) is formed from a single material as a single part molded around the laser bar (5).

6. The laser gain module as claimed in claim 5, in which the material forming the cooling body (3) is made of an alloy containing copper, iron, zinc, aluminum, silver, gold, platinum or tin.

7. The laser gain module as claimed in any one of the preceding claims, in which the laser bar (5) is a crystal fiber, whose crystalline matrix is an oxide, a vanadate, a fluoride, or a tungstate, and which contains rare-earth or metal dopant ions.

8. The laser gain module as claimed in any one of the preceding claims, in which the optical interfaces (7, 9) of the laser bar (5) are covered by a dielectric coating.

9. A laser gain element (20) comprising:
- the laser gain module (1) as claimed in any one of the preceding claims, and
- a cooling block (16) structured for the circulation of a cooling fluid, fixed to the laser gain module (1).

10. A solid-state laser system (30, 40) comprising:
- a laser gain module as claimed in one of the claims 1 to 8 or a laser gain element as claimed in claim 9,
- a source for emission of a pump beam (31, 43) intended for the longitudinal or near-longitudinal pumping of the laser bar (5).

11. A method for fabricating a laser gain module (1), comprising:
- bringing into contact a laser bar (5) with a metal compound in solid or liquid form;
- heating the bar-metal compound assembly to a temperature at least equal to the melting point of the metal compound, allowing the liquefied metal compound to mold itself around the laser bar;
- cooling the bar-metal compound assembly to a temperature lower than the melting point of the metal compound in order to form a non-removable solid body at room temperature; and
- cutting and polishing the bar-metal compound assembly so as to form two optical interfaces arranged opposing one another, all of the surfaces other than the optical interfaces being covered by the metal compound.

12. The fabrication method as claimed in claim 11, comprising:
- the deposition of the laser bar into a recess of a mounting made of metal material prior to bringing it into contact with the metal compound, the metal compound having a melting point lower than that of the metal material from which the mounting is formed,
- the heating of the assembly mounting/metal compound/bar to a temperature lower than that of the melting point of the metal material from which the mounting is made, and
- the cooling of the assembly in order to form said non-removable solid body at room temperature.

13. The fabrication method as claimed in claim 12, furthermore comprising, prior to bringing the bar into contact with the metal compound:
- coating of all of the surfaces other than the optical interfaces of the laser bar with a metallic paint allowing the adhesion of the brazing material, and
- drying of the metallic paint deposited onto the laser bar so as to obtain a metal adhesion layer around the laser bar.

14. The fabrication method as claimed in claim 11, comprising:
- the deposition of the laser bar into a crucible prior to bringing it into contact with the metal compound,
- the heating of the crucible containing the bar-metal compound assembly to a temperature at least equal to the melting point of the metal compound, and
- the de-molding of the bar-metal compound assembly after the cooling.
